# EUROPÄISCHE PATENTSCHRIFT

(11) **EP 2 261 167 B1**
(45) Veröffentlichungstag und Bekanntmachung des Hinweises auf die Patenterteilung: **23.01.2013**
(21) Anmeldenummer: 10005921.1
(22) Anmeldetag: 09.06.2010
(51) Int. Cl.: B66F 9/075, B62B 3/06, B60L 11/18

(54) **Flurförderzeug mit einer Batterieeinheit**
Industrial truck with a battery unit
Chariot de manutention doté d'une unité de batterie

(30) Priorität: 12.06.2009 DE 102009024696
(43) Veröffentlichungstag der Anmeldung: 15.12.2010
(73) Patentinhaber: Jungheinrich Aktiengesellschaft, 22047 Hamburg (DE)
(72) Erfinder: Niebuhr, Michael, 22941 Bargteheide (DE); Hiekel, Oliver, 22085 Hamburg (DE)
(74) Vertreter: Hauck Patent- und Rechtsanwälte

(56) Entgegenhaltungen:
- EP-A1- 2 039 646
- EP-A2- 0 620 604
- DE-A1- 10 241 083
- GB-A- 2 331 054
- JP-A- 2000 085 377
- JP-A- 2001 316 091
- JP-A- 2008 303 059
- JP-A- 2008 303 060

## Beschreibung

Die vorliegende Erfindung betrifft ein Flurförderzeug mit einer Batterieeinheit, die mindestens zwei Batterieelemente aufweist.

Es ist bekannt, Flurförderzeuge mit einer Batterie auszurüsten, die als Batterieblock mit einer Kapazität von beispielsweise 200 Ah ausgestattet ist. Eine solche Batterie besitzt, insbesondere wenn sie in herkömmlicher Technik als Bleiakkumulator hergestellt ist, ein erhebliches Gewicht, das ein Austauschen der Batterie an dem Flurförderzeug aufwendig macht. Oft ist es erforderlich, dass ein zweiter Stapler eingesetzt wird, um die Batterieeinheit an einem Flurförderzeug auszutauschen. Auch ist es bekannt, speziell für die Batterie ausgestaltete Batteriewechselstationen vorzusehen, an denen dann die Batterie ausgetauscht werden kann.

Aus DE 600 37 155 D2 ist eine Gleichstromquelle für Elektromotorfahrzeuge bekannt, bei der einzelne Batterien in Kästen angeordnet sind, wobei die Kästen außerhalb des selbstfahrenden Elektrofahrzeugs stapelbar sind. Die Kästen besitzen eine Seitenwand, die einen Durchlass für Kabel zur elektrischen Verbindung der Batterien bilden.

Aus GB 2 331 054 A ist ein Flurförderzeug, nämlich ein Hubmast, bekannt. Eine Batterieaufnahmeeinheit ist zwischen den Mastenantriebsteilen angeordnet und kann nach vorne oder nach hinten bezogen auf die Fahrtrichtung des Flurförderzeugs herausgezogen werden.

Aus JP 2000-85377 A ist ein Flurförderzeug bekannt, bei dem ein Batterieaufnahmetrog im Antriebsteil außenliegend im Bereich des Antriebsrades eingehängt werden kann.

Aus EP 2 039 646 A1 ist ein batteriebetriebenes Flurförderzeug bekannt, dass zwei oder mehr Batteriezellen einer wartungsfreien Batterie in vorhandenen Hohlräumen oder anderen schlecht zugänglichen Orten des Flurförderzeugs nicht auswechselbar integriert sind, wobei mindestens eine der Batteriezellen innerhalb eines Radärms, unterhalb einer Standplattform oder in ein Hubgerüst eingebaut ist.

Aus JP 2001-316091 ist ein batteriebetriebenes Flurförderzeug bekannt, das zwei Batterieaufnahmeeinheiten besitzt, wobei eine erste Batterieaufnahmeeinheit oberhalb der Hinterachse des Flurförderzeugs und eine zweite Batterieeinheit zwischen den Fahrzeugachsen des Flurförderzeugs angeordnet ist.

Die Schrift JP 2008-303059 A offenbart ein Flurförderzeug mit einer Batterieeinheit, die mindestens zwei Batterieelemente aufweist, und einer Batterieaufnahmeeinrichtung, welche die Batterieelemente separat aufnehmen kann, wobei die Batterieaufnahmeeinrichtung die Batterieelemente mit elektrischen Versorgungsleitungen des Flurförderzeugs verbinden kann. Das in dem Dokument JP 2008-303059 A beschriebene Flurförderzeug umfaßt weiter eine Schaltsteuerung, die zwischen einer Parallelschaltung und einer seriellen Schaltung der Batterieelemente wählen kann.

Aus DE 102 41 083 ist ein Energieversorgungssystem zur Verwendung in einem elektrisch betriebenen Deichselhubwagen bekannt, bei dem in einem verschließbaren Gehäuse eine Mehrzahl von miteinander in Reihe und/oder parallel verschalteter Akkumulatoren und ein Ladegerät angeordnet ist.

Aus JP 2008-303060 ist ein batteriebetriebenes Flurförderzeug bekannt mit einem Kondensator zur Speicherung des regenerativen Stromes des Elektromotors.

Aus EP 0 620 604 ist ein Flurförderzeug bekannt, das mit einer aus Bleibatterien gebildeten Ensemble angetrieben wird.

Der Erfindung liegt die Aufgabe zugrunde, ein Flurförderzeug mit einer Batterieeinheit bereitzustellen, bei dem der manuelle Austausch von Wechselbatterien deutlich vereinfacht ist.

Erfindungsgemäß wird die Aufgabe durch ein Flurförderzeug mit den Merkmalen aus Anspruch 1 gelöst. Vorteilhafte Ausgestaltungen bilden den Gegenstand der Unteransprüche.

Das erfindungsgemäße Flurförderzeug ist mit einer Batterieeinheit ausgerüstet, die mindestens zwei Batterieelemente aufnehmen kann. Das Flurförderzeug besitzt erfindungsgemäß eine Batterieaufnahmeeinrichtung, welche Batterieelemente separat aufnehmen und mit elektrischen Versorgungsleitungen des Flurförderzeugs verbinden kann. Die Batterieaufnahmeeinrichtung schafft die Möglichkeit, die Batterieelemente unabhängig und ohne diese elektrisch untereinander zu verbinden, in das Flurförderzeug einzusetzen. Bei dem erfindungsgemäßen Flurförderzeug ist jedes Batterieelement ausgelegt, das Flurförderzeug mit elektrischer Leistung zu versorgen. Dies bedeutet, dass jedes Batterieelement eine Spannung bereitstellt, die ausreicht, um das Flurförderzeug mit elektrischer Leistung zu versorgen.

Bei dem erfindungsgemäßen Flurförderzeug liegt der Vorteil darin, dass bedarfsweise die autonomen Batterieelemente in beliebiger Anzahl und damit mit einer beliebigen Batteriekapazität in das erfindungsgemäße Flurförderzeug eingesetzt und an diesem nachgerüstet werden können. Hierdurch kann die Batteriekapazität je nach Auslastungsgrad des Flurförderzeugs angepasst werden. Die herkömmlich eingesetzten Wechselbatterien können somit entfallen. Auch können die autonomen Batterieelemente ein deutlich geringeres Gewicht als die herkömmlichen Batterien besitzen, so dass beim manuellen Austausch der Batterieelemente keine zusätzlichen Hilfsmittel erforderlich sind.

In einer bevorzugten Ausgestaltung ist jedes der Batterieelemente in der Batterieaufnahmeeinrichtung verriegelbar. Hierdurch wird sichergestellt, dass das Batterieelement in der Batterieaufnahmeeinheit sicher und ohne die Gefahr eines Verrutschens in der Batterieaufnahmeinrichtung gehalten ist.

In einer weiteren bevorzugten Ausgestaltung besitzt jedes Batterieelement einen Tragegriff, mit dem das Batterieelement in der Batterieaufnahmeeinrichtung entriegelt werden kann. Der Tragegriff dient einerseits dazu, das Batterieelement zu tragen, wobei das Gewicht des Batterieelements ein Tragen zulässt. Gleichzeitig dient der Tragegriff dazu, das Batterieelement in der Batterieaufnahmeeinrichtung zu entriegeln, wobei der Tragegriff bevorzugt beweglich an dem Batterieelement angelenkt ist.

Alternativ oder zusätzlich kann in einer weiteren vorteilhaften Ausgestaltung eine zentrale Entriegelungseinrichtung in der Batterieaufnahmeeinrichtung vorgesehen sein, mit der sämtliche in der Batterieaufnahmeeinheit befindliche Batterieelemente gleichzeitig entriegelt werden können. Eine solche Entriegelungseinrichtung bietet den Vorteil, dass bei einem Austausch sämtliche Batterieelemente, diese nicht einzeln entriegelt werden müssen, sondern über eine zentrale Entriegelungseinheit insgesamt entriegelt werden können.

Erfindungsgemäß sind die Batterieelemente derart elektrisch mit den Versorgungsleitungen des Flurförderzeugs verbunden, dass jeweils nur eines der Batterieelemente das Flurförderzeug mit elektrischer Leistung versorgt.

In einer weiteren bevorzugten Ausgestaltung ist für jedes Batterieelement eine Anzeigeeinheit vorgesehen, die den Ladezustand der Batterie anzeigt. Die Anzeige des Ladezustandes erlaubt es einer Bedienperson des Flurförderzeugs rechtzeitig zu erkennen, dass ein Batterieelement zur Neige geht und wieder aufgeladen werden muss.

Erfindungsgemäß ist das Flurförderzeug mit einer Steuereinheit ausgestattet, die den Ladezustand der Batterieelemente in der Batterieaufnahmeeinrichtung erfasst und selbsttätig von einem Batterieelement, dessen Ladung einen vorbestimmten Minimalwert unterschreitet, auf ein Batterieelement umschaltet, dessen Ladung oberhalb eines vorbestimmten Minimalwerts liegt. Die Steuereinheit erlaubt es, dass während des Betriebs des Flurförderzeugs, wenn ein Batterieelement zur Neige geht, selbsttätig auf ein weiterhin aufgeladenes Batterieelement umgeschaltet wird, ohne dass der Betrieb des Flurförderzeugs unterbrochen werden muss.

In einer bevorzugten Ausgestaltung sind die Batterieelement als Lithium-Ionen-Akkumulatoren ausgebildet.

Ein bevorzugtes Ausführungsbeispiel der Erfindung wird nachfolgend anhand von Figuren näher erläutert.
- Fig. 1: zeigt ein erfindungsgemäßes Flurförderzeug in einer perspektivischen Ansicht von der Seite.
- Fig. 2: zeigt das Flurförderzeug aus Fig. 1 in einer Ansicht von oben,
- Fig. 3: zeigt ein Batterieelement in einer perspektivischen Ansicht von der Seite und
- Fig. 4: zeigt ein in die Batterieaufnahmeeinrichtung eingesetztes Batterieelement, bei dem die elektrischen Kontakte im Fußbereich des Batterieelements und die Verriegelung im Bereich des Kopfes eines Batterieelements erfolgen,
- Fig. 5: zeigt einen verschwenkbaren Tragegriff mit einem Verriegelungselement im Querschnitt,
- Fig. 6: zeigt einen festen Tragegriff mit einem Betätigungselement zur Entriegelung des Batterieelements im Querschnitt,
- Fig. 7: zeigt einen verschwenkbaren Tragegriff, der mit einer Entriegelung des Batterieelements über eine Stange gekoppelt ist,
- Fig. 8: zeigt einen anhebbaren Tragegriff des Batterieelements, der mit einer Verriegelungseinheit gekoppelt ist,
- Fig. 9: zeigt einen festen Tragegriff mit einem Drucktaster zum Entriegeln des Batterieelements,
- Fig. 10: zeigt einen verschieblichen Tragegriff, der zum Entriegeln verschiebbar ist,
- Fig. 11: zeigt einen verschwenkbaren Tragegriff mit einem exzentrischen Verriegelungselement,
- Fig. 12: zeigt eine Detailansicht eines Verriegelungsmechanismus, der gleichzeitig einen elektrischen Kontakt herstellt,
- Fig. 13: zeigt ein Batterieelement mit einem Ringkontakt für einen elektrischen Anschluss und
- Fig. 14: zeigt das Batterieelement aus Fig. (4) in einer perspektivischen Ansicht.

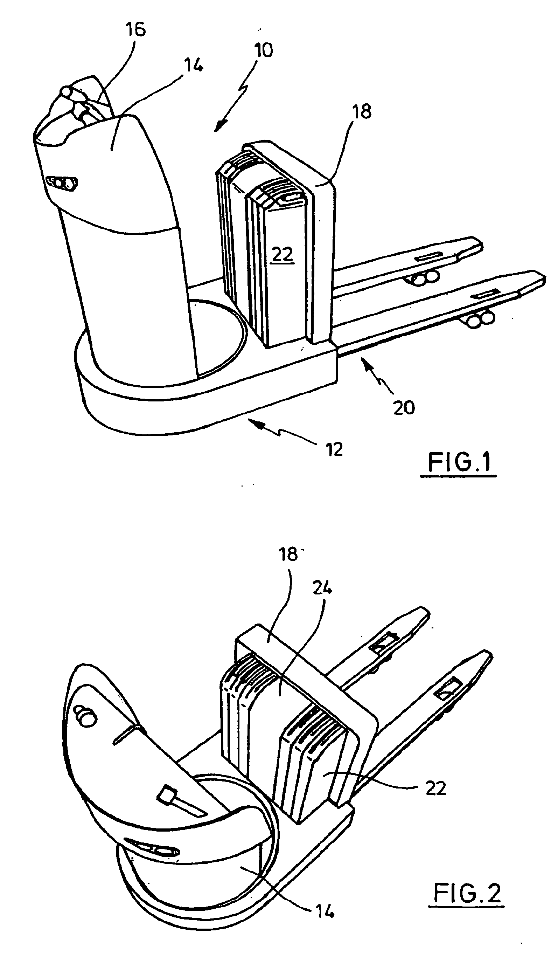

Fig. 1 zeigt ein Elektro-Niederhubwagen 10, dessen Fahrzeugkörper 12 mit einem Benutzerstand 14 ausgestattet ist. Der Benutzerstand 14 besitzt Bedienelemente 16, über die das Fahrzeug gesteuert wird. Gegenüber dem Benutzerstand 14 auf der Seite des Fahrzeugkörpers 12 zu einem Lasttragteil 20 ist eine Batterieaufnahmeeinrichtung 18 vorgesehen. Die Batterieaufnahmeeinrichtung 18 besitzt eine im wesentlichen rechteckige Form, die auf dem Fahrzeugkörper 12 steht und an dem Übergang des Fahrzeugkörpers 12 zu dem Lasttragteil 20 des Fahrzeugs angeordnet ist. In die Batterieaufnahmeeinrichtung 18 sind einzelne Batterieelemente 22 eingestellt. Die Batterieelemente 22 sind in der Batterieaufnahmeeinrichtung verriegelt (nicht dargestellt) und mit den elektrischen Versorgungsleitungen (nicht dargestellt), die in den Fahrzeugkörper geführt sind, elektrisch leitend verbunden.

In dem dargestellten Elektro-Niederhubwagen sind insgesamt sechs Batterieelemente in die Batterieaufnahmeeinrichtung eingestellt (vergleiche Fig. 2). Die Batterieelemente 22 sind jeweils in Dreiergruppen seitlich neben einem zentralen Block 24 der Batterieaufnahmeeinrichtung angeordnet. In dem zentralen Block 24 können elektrische Leitungen und Steuerelemente für das Flurförderzeug und für die Batterieelemente vorgesehen sein. Der zentrale Block 24 kann beispielsweise auch als Sitzfläche für den Benutzer ausgebildet sein.

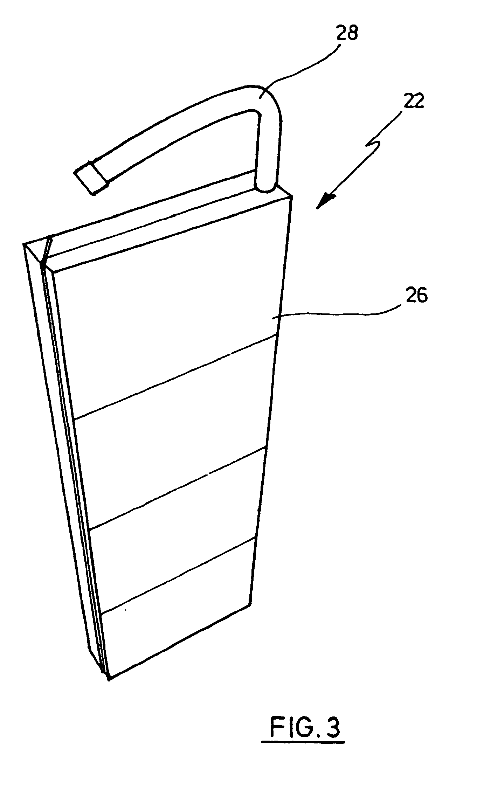

Fig. 3 zeigt ein einzelnes Batterieelement in einer perspektivischen Ansicht. Das Batterieelement 22 besitzt einen Batteriekörper 26, der mit einem ergonomisch geformten Handgriff 28 ausgestattet ist. Der Batteriekörper 26 besteht aus sechzehn Lithium-Ionen-Akkumulatoren, die jeweils bei einer Spannung von 14,8 V eine Kapazität von 4,4 Ah besitzen. Von diesen sechzehn Lithium-Ionen-Akkumulatoren sind jeweils acht parallel geschaltet, so dass das Batterieelement 22 mit einer Spannung von 29,6 V eine Kapazität von 35,2 Ah besitzt. Ist das Flurförderzeug mit sechs solcher Batterieelemente ausgestattet, so besitzt das Flurförderzeug eine Kapazität insgesamt von 211,6 Ah. Diese Kapazität entspricht ungefähr der bisher bei Flurförderzeugen eingesetzten Kapazität für die Batterieeinheit. Die Verwendung der Lithium-Ionen-Technik bietet im Hinblick auf Dichte und Volumen besondere Vorteile, denn ein Batterieelement 22 besitzt ein Volumen von ungefähr 5,5 1, so dass sich für das Fahrzeug sich ein gesamter Volumenbedarf von ungefähr 33 1 ergibt. Dies ist deutlich weniger als beispielsweise bei der Verwendung von Bleiakkumulatoren. Auch gewichtsmäßig liefert der Einsatz der Lithium-Ionen-Technik deutliche Vorteile. Das Gewicht des dargestellten Batterieelements beläuft sich auf ungefähr 6,8 kg und erlaubt somit bequem die Handhabung durch den Benutzer. Bei einer Bestückung des Flurförderzeugs mit sechs Batterieelementen ergibt sich ein zusätzliches Gewicht von 40,8 kg, was für das Fahrzeug eine deutlich geringere Zuladung als bei der Verwendung eines Bleiakkumulators bedeutet.

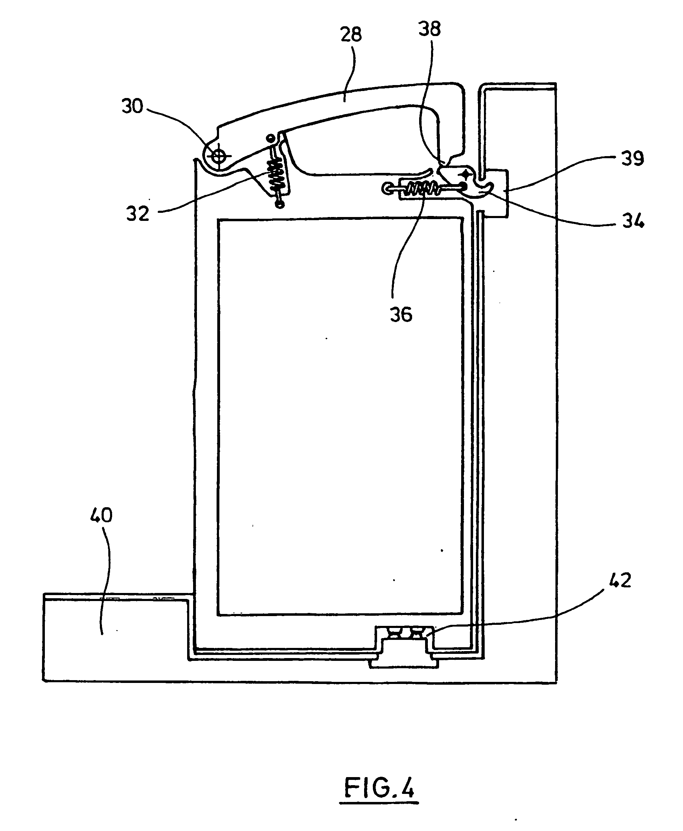

Fig. 4 zeigt in einer Ansicht von der Seite ein Batterieelement, dass in eine Batterieaufnahmeeinrichtung eingesetzt ist. Das Batterieelement besitzt einen Tragegriff 28, der über eine Drehlagerung 30 verschwenkbar an dem Batterieelement angeordnet ist. Über eine Feder 32 wird der Tragegriff in die dargestellte Position vorgespannt. An seiner zu der Batterieaufnahmeeinrichtung weisenden Seite besitzt das Batterieelement einen Drehriegel 34, der über eine Feder 36 in eine entriegelte Position vorgespannt ist. Über einen Verriegelungsvorsprung 38 wirkt der Tragegriff 28 mit dem Drehriegel 34 derart zusammen, dass in der verriegelten Position des Batterieelements der Verriegelungsvorsprung 38 den Drehriegel 34 in eine Aufnahme 39 in der Batterieaufnahmeeinrichtung drückt. Wird zum Entriegeln des Batterieelements der Tragegriff 28 leicht angehoben, so wird über die Feder 36 der Drehriegel 34 zurückgezogen und das Batterieelement entriegelt. Die Kontakte zur elektrischen Verbindung des Batterieelements mit den zugehörigen Kontakten der Batterieaufnahmeeinrichtung sind an einem Rahmen 40 des Flurförderzeugs angeordnet und allgemein mit dem Bezugszeichen 42 gekennzeichnet. Die Ausgestaltungen für die Kontaktierung des Batterieelements werden nachfolgend noch näher beschrieben.

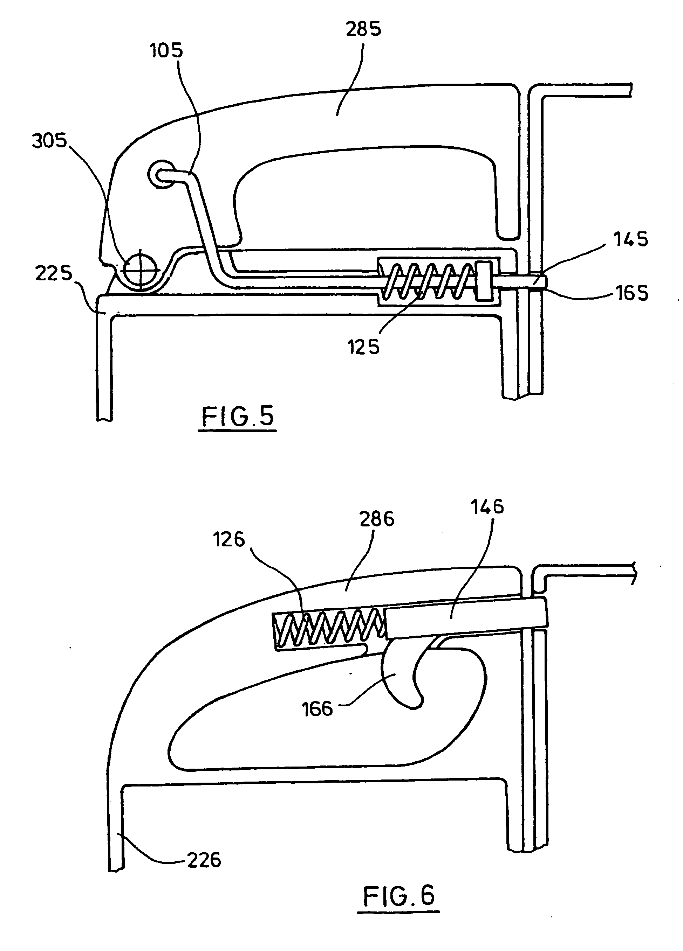

Fign. 5 bis 11 zeigen unterschiedliche Verriegelungsmechanismen für das Batterieelement in der Batterieaufnahmeeinrichtung.

Fig. 5 zeigt einen Tragegriff 285, der über ein Drehgelenk 305 verschwenkbar an einem Verriegelungselement 225 befestigt ist. Der Tragegriff 285 besitzt eine Druckstange 105, die über eine Feder 125 einen Verriegelungsvorsprung 145 in eine Verriegelungsaufnahme 165 der Batterieaufnahmeeinrichtung vorspannt. Zur Entriegelung des Batterieelements 225 wird der Tragegriff 285 leicht angewinkelt, wobei die Druckstange 105 gegen die Kraft der Feder 125 zurückgezogen wird. Hierdurch tritt der Verriegelungsvorsprung 145 aus der Verriegelungsaufnahme 165 zurück und das Batterieelement 225 ist freigegeben.

Fig. 6 zeigt ein Ausführungsbeispiel mit einem festen Tragegriff 286, der mit dem Batterieelement 226 oder einer Ummantelung des Batterieelements verbunden ist. Der Verriegelungsmechanismus besitzt einen Verriegelungsvorsprung 146, der durch eine in dem Tragegriff 286 angeordnete Feder 126 in seine verriegelte Position vorgespannt ist. Zum Entriegeln kann ein Abzug 166 an dem Verriegelungsvorsprung 146 betätigt und der Verriegelungsvorsprung 146 gegen die Kraft der Feder 126 zurückgezogen werden. Hierdurch wird das Batterieelement in der Batterieaufnahmeeinrichtung entriegelt.

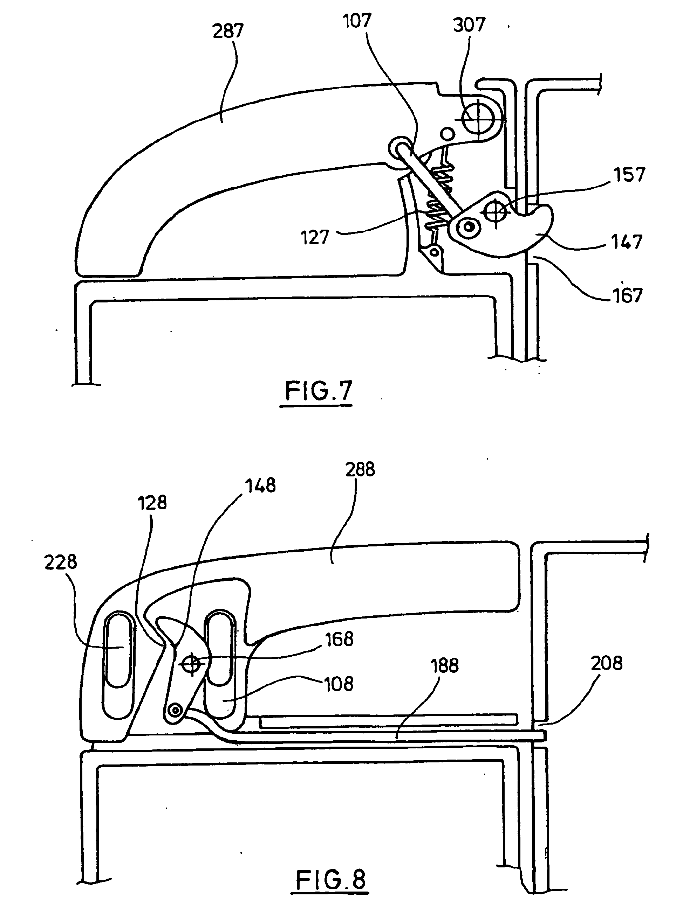

Fig. 7 zeigt eine Ausgestaltung eines schwenkbaren Tragegriffs 287, der an einer zur Batterieaufnahmeeinrichtung weisenden Seite eine Drehlagerung 307 aufweist. Der Tragegriff 287 ist über eine Feder 127 in seine verriegelnde Position vorgespannt. Über eine Zugstange 107 wird ein Drehriegel 147 in einer Aufnahme 167 in seine verriegelnde Position gebracht. Wenn der Tragegriff 287 gegen die Kraft der Feder 127 angehoben wird, verschwenkt der Drehriegel 147 in seiner Drehlagerung 157 und wird außer Eingriff mit der Batterieaufnahmeeinrichtung gebracht.

Fig. 8 zeigt eine alternative Ausgestaltung eines Tragegriffs 288, der über Langlöcher 108 in seiner Querrichtung .anhebbar ist. An dem Tragegriff 288 ist im Bereich der Langlöcher ein Vorsprung 128 ausgebildet, der mit einem Kipphebel 148 zusammenwirkt. Der Kipphebel 148 ist über eine Lagerung 168 an dem Tragegriff 288 verschwenkbar angeordnet. Das nicht mit dem Vorsprung 128 zusammenwirkende Ende des Kipphebels 148 ist mit einer Verriegelungsstange 188 versehen, die in eine Aufnahme 208 der Batterieaufnahmeeinrichtung vorsteht. Fig. 8 zeigt die verriegelte Position des Batterieelements. Durch Anheben des Tragegriffs 288 bewegt sich dieser in seinen Langlöchern 108, wobei hierdurch der Vorsprung 128 den Kipphebel 148 verschwenkt. Der verschwenkte Kipphebel 148 zieht die Verriegelungsstange 188 aus ihrer verriegelten Position zurück. Ein besonderer Vorteil der Ausgestaltung gemäß Fig. 8 ist, dass diese ohne ein Federelement auskommt.

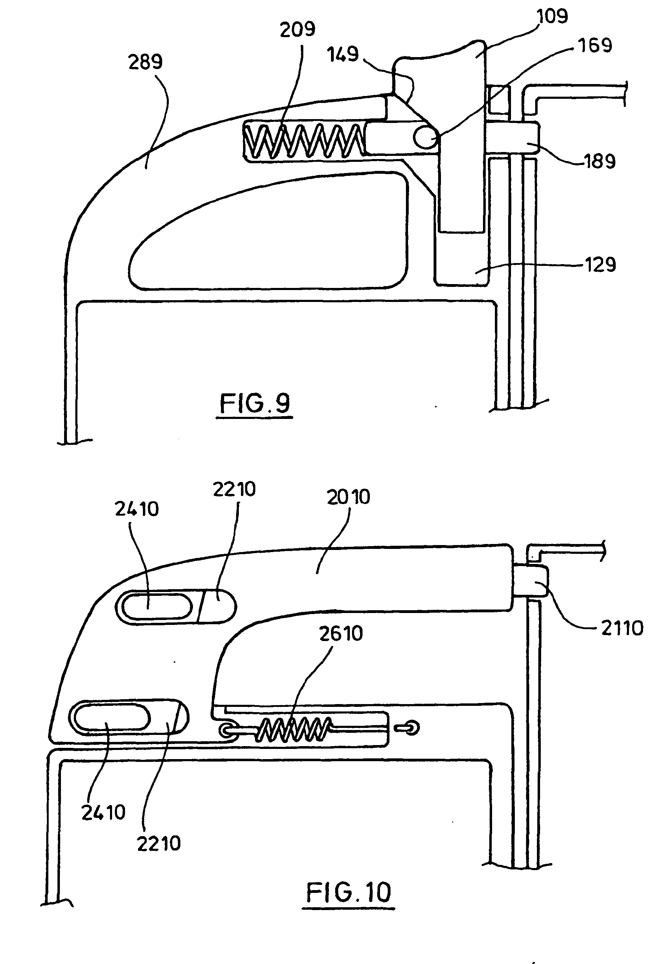

Fig. 9 zeigt eine weitere Ausgestaltung des Verriegelungsmechanismus mit einem festen Tragegriff 289. Tragegriff 289 besitzt einen Druckknopf 109, der in einer Ausnehmung 129 geführt ist. Der Kopfbereich des Druckknopfs 109 besitzt eine Anlagefläche 149, die mit einem Vorsprung 169 des Vernegelungsstiftes 189 zusammenwirkt. Über eine Feder 209 ist der Verriegelungsstift 189 in seine verriegelnde Position vorgespannt. Dabei drückt der Vorsprung 169 die Anlagefläche 149 den Druckknopf 109 aus der Oberfläche des Tragegriffs 289 heraus. Zum Entriegeln des Batterieelements wird der Druckknopf 109 in die Ausnehmung 129 gedrückt, wobei der Verriegelungsstift 189 gegen die Kraft des Federelements 209 zurückgeschoben wird und das Batterieelement so entriegelt.

Fig. 10 zeigt eine weitere Ausgestaltung mit einem verschieblichen Tragegriff 2010, der an seinem freien Ende einen Verriegelungsvorsprung 2110 aufweist. Der Tragegriff 2010 besitzt ein Paar von Langlöchern 2210, die auf Vorsprüngen 2410 geführt sind. Über eine Feder 2610 wird der Tragegriff 2010 in seine verriegelte Position vorgespannt. Gegen die Kraft der Feder 2610 kann der Tragegriff aus seiner verriegelten Position geschoben werden.

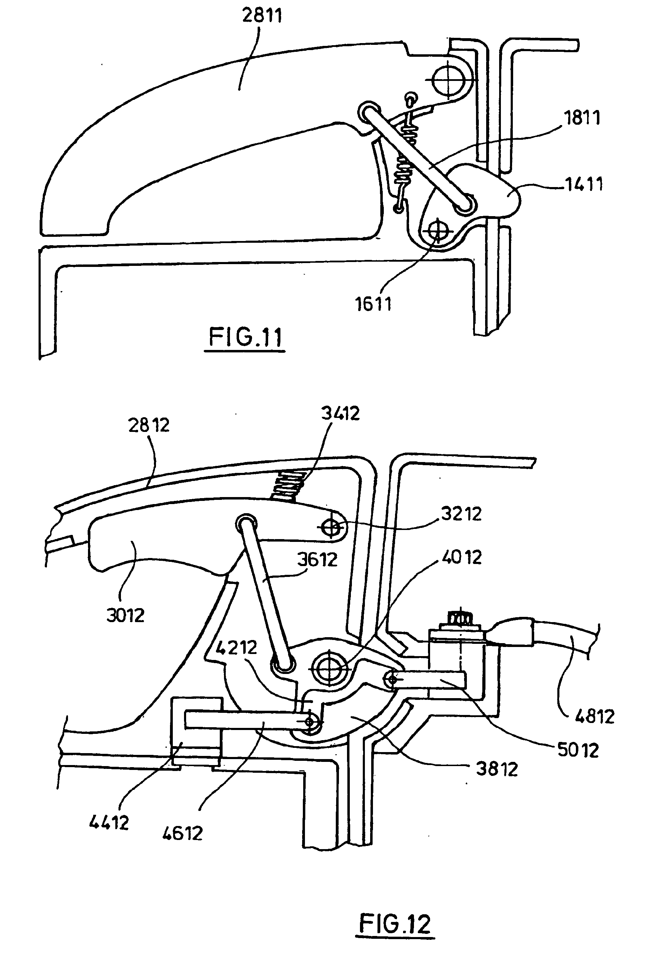

Fig. 11 zeigt einen Tragegriff 2811 mit seinem Verriegelungsmechanismus ähnlich der Ausgestaltung aus Fig. 7. Im Unterschied hierzu ist jedoch der Drehriegel 1411 an seinem unteren Ende über ein Lager 1611 verdrehbar gelagert. Durch die Druckstange 1811 wird auf diese Weise der Drehriegel 1411 aus der verriegelten Position herausgezogen.

Fig. 12 zeigt eine Ausgestaltung, bei der über den Verriegelungsmechanismus auch die elektrische Kontaktierung des Batterieelements erfolgt. Fig. 12 zeigt einen Tragegriff 2812, an dem ein verschwenkbarer Auslösehebel 3012 angeordnet ist. Der Auslösehebel 3012 ist in dem Drehlager 3212 verschwenkbar gelagert und über eine Feder 3412 in die verriegelnde Position vorgespannt. Über eine Druckstange 3612 ist der Auslösehebel 3012 mit einem Drehriegel 3812 verbunden. Der Drehriegel 3812 ist in einem Drehlager 4012 drehbar gelagert. Der Drehriegel 3812 besitzt eine elektrisch leitende Kontaktfläche 4212, über die eine elektrische Verbindung zwischen dem Batterieelement und einem Kontakt des Flurförderzeugs hergestellt wird. Das Batterieelement enthält einen Kontakt 4412, der elektrisch leitend mit einem Kontaktarm 4612 verbunden ist. In dem Flurförderzeug ist ein elektrisches Versorgungskabel 4812 ebenfalls über einen Kontaktarm 5012 mit der elektrisch leitenden Kontaktfläche 4212 des Drehriegels 3812 verbunden. In verriegelter Position sind die Kontaktarme 4612 und 5012 in Kontakt mit der Kontaktfläche 4812, so dass Strom von dem Batterieelement zum Flurförderzeug fließen kann. Der Drehriegel 3812 verriegelt dabei gleichzeitig das Batterieelement an der Batterieaufnahmeeinrichtung. Zum Entriegeln des Batterieelements wird der Auslösehebel 3012 betätigt, der Drehriegel 3812 schwenkt über die Druckstange 3612 in seine entriegelnde Position. Hierbei wird der elektrische Kontakt zwischen dem Batterieelement und dem Flurförderzeug unterbrochen.

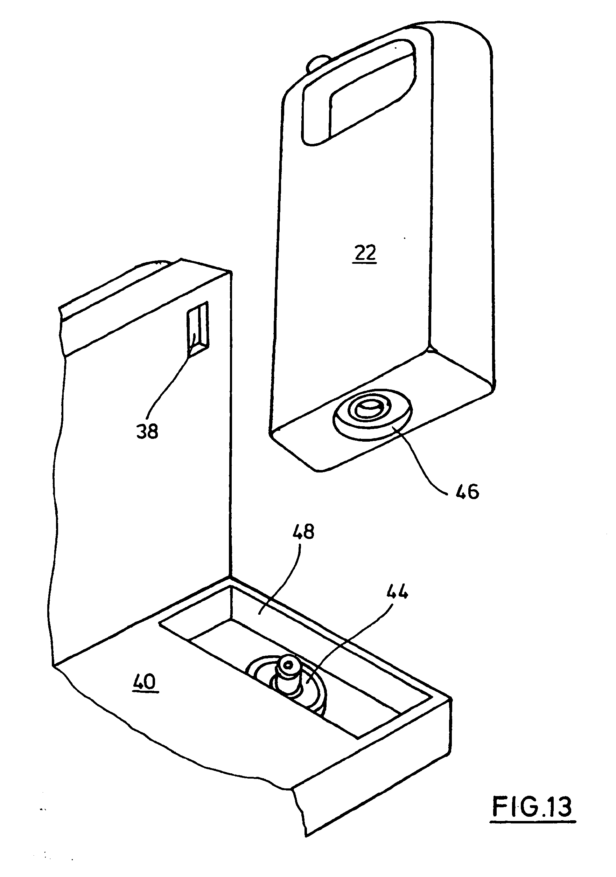

Fig. 13 zeigt in einer perspektivischen Ansicht ein Batterieelement 22 mit einem runden Steckanschluss 44 und einer runden Steckaufnahme 46 zur Herstellung einer elektrisch leitenden Verbindung zwischen Batterieelement und Flurförderzeug. Obwohl die elektrischen Anschlüsse rund ausgebildet sind, wird das Batterieelement 22 in die Aufnahme 48 in dem Fahrzeugrahmen 40 eingesetzt. Durch das eingesetzte Batterieelement sind die elektrischen Verbindungen geschlossen. In Fig. 13 ist ferner die Ausnehmung 38 für den Verriegelungsmechanismus der Batterieaufnahmeeinrichtung zu erkennen.

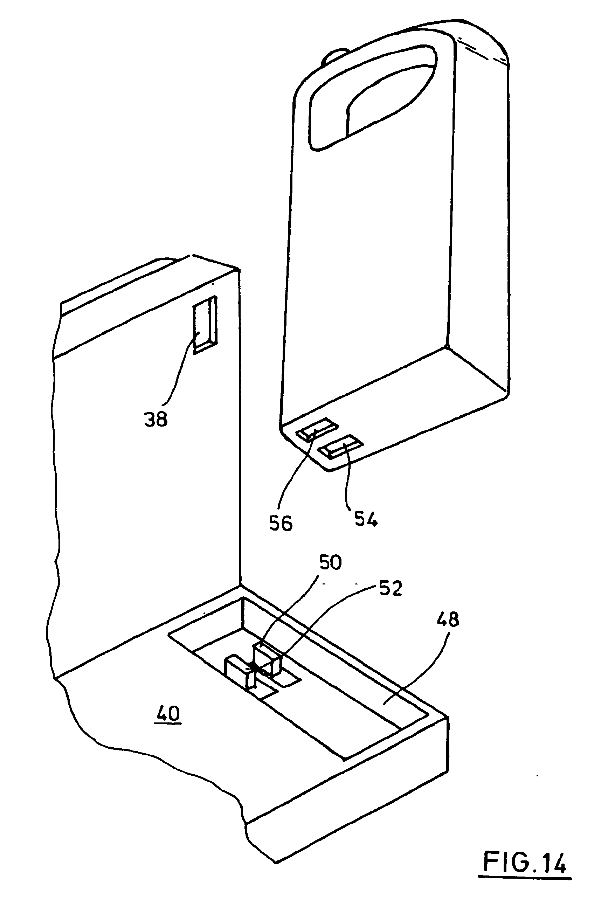

Fig. 14 zeigt eine alternative Ausgestaltung für die elektrischen Kontakte, bei der zwei elektrische Kontakte 50 und 52 separat ausgebildet sind und eine elektrische Verbindung mit den entsprechenden Gegenkontakten 54 und 56 in dem Batterieelement erfolgt.

Die Erfindung wird vorstehend am Beispiel eines Elektro-Niederhubwagens erläutert. Jedoch ist eine Verwendung für sämtliche elektrisch betätigte Flurförderzeuge möglich.

## Patentansprüche

1. Flurförderzeug mit einer Batterieeinheit, die mindestens zwei Batterieelemente (22) aufweist, und einer Batterieaufnahmeeinrichtung (18), welche die Batterieelemente (22) separat aufnehmen kann, **dadurch gekennzeichnet, dass** die Batterieaufnahmeeinrichtung (18) die Batterieelemente mit elektrischen Versorgungsleitungen des Flurförderzeugs verbinden kann, ohne die Batterieelemente (22) elektrisch untereinander zu verbinden, wobei jedes Batterieelement (22) ausgelegt ist, dass jeweils nur eines der Batterieelemente (22) das Flurförderzeug mit elektrischer Energie versorgen kann und eine Steuereinheit vorgesehen ist, die den Ladezustand der Batterieelemente (22) in der Batterieaufnahmeeinrichtung (10) erfasst und selbsttätig von einem Batterieelement (22), dessen Ladung einen bestimmten Minimalwert unterschreitet, auf ein Batterieelemente (22) umschaltet, dessen Ladung oberhalb des vorbestimmten Minimalwerts liegt..

2. Flurförderzeug nach Anspruch 1, **dadurch gekennzeichnet, dass** jedes Batterieelement (22) in der Batterieaufnahmeeinrichtung (18) verriegelbar ist.

3. Flurförderzeug nach Anspruch 2, **dadurch gekennzeichnet, dass** das Batterieelement (22) einen Tragegriff (28) aufweist, mit dem das Batterieelement (22) in der Batterieaufnahmeeinrichtung (18) entriegelt werden kann.

4. Flurförderzeug nach Anspruch 3, **dadurch gekennzeichnet, dass** der Tragegriff (28) beweglich an dem Batterieelement (22) befestigt ist.

5. Flurförderzeug nach Anspruch 2 oder 3, **dadurch gekennzeichnet, dass** eine zentrale Entriegelungseinrichtung an der Batterieaufnahmeeinrichtung (18) vorgesehen ist, mit der sämtliche Batterieelemente (22) in der Batterieaufnahmeeinrichtung (18) entriegelbar sind.

6. Flurförderzeug nach einem der Ansprüche 1 bis 5, **dadurch gekennzeichnet, dass** für jede Batterieeinheit eine Anzeigeeinheit vorgesehen ist, die den Ladezustand der Batterieeinheit anzeigt.

7. Flurförderzeug nach einem der Ansprüche 1 bis 6, **dadurch gekennzeichnet, dass** die Batterieeinheiten als Lithium-Ionen-Akkumulatoren ausgebildet sind.

## Claims

1. An industrial truck with a battery unit having at least two battery elements (22) and a battery holding device (18) that can separately hold the battery elements (22), **characterized in that** the battery holding device (18) can connect the battery elements to electrical supply lines of the industrial truck without electrically connecting the battery elements (22) to each other, wherein each battery element (22) is designed such that only one of the battery elements (22) can supply the industrial truck with electrical energy in each case, and a control unit is provided that detects the charge of the battery elements (22) in the battery holding device (18) and automatically switches from a battery element (22) with a charge that has fallen below a specific minimum value to a battery element (22) with a charge that lies above the specified minimum value.

2. The industrial truck according to claim 1, **characterized in that** each battery element (22) can be locked in the battery holding device (18).

3. The industrial truck according to claim 2, **characterized in that** battery element (22) has a carrying handle (28) by means of which the battery element (22) can be unlocked in the battery holding device (18).

4. The industrial truck according to claim 3, **characterized in that** the carrying handle (28) is moveably fastened to the battery element (22).

5. The industrial truck according to claim 2 or 3, **characterized in that** a central unlocking device is provided on the battery holding device (18) by means of which all of the battery elements (22) in the battery holding device (18) can be unlocked.

6. The industrial truck according to one of claims 1 to 5, **characterized in that** a display unit is provided for each battery unit that displays the charge of the battery unit.

7. The industrial truck according to one of claims 1 to 6, **characterized in that** the battery units are formed as lithium ion accumulators.

## Revendications

1. Chariot de manutention doté d'une unité de batterie comprenant au moins deux éléments de batterie (22), et d'un dispositif de logement de batterie (18) qui peut accueillir séparément les éléments de batterie (22), **caractérisé en ce que** le dispositif de logement de batterie (18) peut raccorder les éléments de batterie à des lignes auxiliaires électriques du chariot de manutention, sans raccorder électriquement les éléments de batterie (22) entre eux, chaque élément de batterie (22) étant conçu de telle sorte que respectivement seul un des éléments de batterie (22) peut alimenter le chariot de manutention en énergie électrique et de sorte qu'une unité de commande est prévue, qui détecte l'état de charge des éléments de batterie (22) dans le dispositif de logement de batterie (18) et commute automatiquement d'un élément de batterie (22) dont la charge n'atteint pas une valeur minimale définie à un élément de batterie (22) dont la charge dépasse la valeur minimale prédéfinie.

2. Chariot de manutention selon la revendication 1, **caractérisé en ce que** chaque élément de batterie (22) est verrouillable dans le dispositif de logement de batterie (18).

3. Chariot de manutention selon la revendication 2, **caractérisé en ce que** l'élément de batterie (22) présente une poignée de manutention (28) qui permet de déverrouiller l'élément de batterie (22) dans le dispositif de logement de batterie (18).

4. Chariot de manutention selon la revendication 3, **caractérisé en ce que** la poignée de manutention (28) est fixée mobile sur l'élément de batterie (22).

5. Chariot de manutention selon les revendications 2 ou 3, **caractérisé en ce qu'**un dispositif de déverrouillage central est prévu sur le dispositif de logement de batterie (18), lequel permet de déverrouiller les éléments de batterie complets (22) dans le dispositif de logement de batterie (18).

6. Chariot de manutention selon une des revendications 1 à 5, **caractérisé en ce que** pour chaque unité de batterie est prévue une unité d'affichage qui affiche l'état de charge de l'unité de batterie.

7. Chariot de manutention selon une des revendications 1 à 6, **caractérisé en ce que** les unités de batterie se présentent sous la forme d'accumulateurs Lithium-Ion.
